# EUROPÄISCHE PATENTANMELDUNG

(11) **EP 1 850 199 A1**
(43) Veröffentlichungstag der Anmeldung: **31.10.2007**
(21) Anmeldenummer: 07008746.5
(22) Anmeldetag: 30.04.2007
(51) Int. Cl.: G05B 19/418, G05B 23/02, G07C 3/00

(54) **Vorrichtung zur Überwachung von Produktionsabläufen**

(30) Priorität: 28.04.2006 AT 7372006
(71) Anmelder: Machine Relationship Management LLC, Wilmington DE 19808 (US)
(72) Erfinder:
(74) Vertreter: Babeluk, Michael

(57) **Zusammenfassung**

Die Erfindung betrifft eine Vorrichtung zur Überwachung von Produktionsabläufen auf Produktionslinien mit mindestens einer Einzelkomponente (10a, 10b, 10c), bestehend aus mindestens einer Überwachungseinheit (1; 1a, 1b, 1c), die mit einem Bussystem in Verbindung steht, wobei die Überwachungseinheit (1; 1a, 1b, 1c) aus einem standardisierten Gehäuse besteht, in dem eine Schnittstelle (6; 6a, 6b) zur Verbindung der Überwachungseinheit (1; 1a, 1b, 1c) mit einer Einzelkomponente (10a, 10b, 10c) der Produktionslinie vorgesehen ist, und dass die Überwachungseinheit ein Display (2) aufweist, das dazu ausgebildet ist, den Betriebszustand der Einzelkomponente (10a, 10b, 10c) anzuzeigen. Eine leichte Bedienung bei geringem Herstellungsaufwand kann dadurch erreicht werden, dass die Schnittstelle (6; 6a, 6b) als eine unidirektionale Eingangsschnittstelle zum Empfang eines binären Digitalsignals ausgebildet ist.

## Beschreibung

Die Erfindung betrifft eine Vorrichtung zur Überwachung von Produktionsabläufen gemäß dem Oberbegriff von Patentanspruch 1.

Es ist bekannt, die Einzelkomponenten von komplexen Fertigungslinien untereinander zu vernetzen, um eine effiziente Produktionssteuerung vorsehen zu können. So bestehen etwa Flaschenreinigungs- und Abfüllanlagen aus einer Vielzahl von Einzelkomponenten, die einzelne Arbeitsschritte an den Flaschen durchführen und die Flaschen aneinander übergeben. Erfolgt die Übergabe direkt, so müssen die Einzelkomponenten miteinander synchronisiert werden, bei nicht synchronisierten Einzelkomponenten sind Pufferspeicher vorgesehen, um Schwankungen in der Bearbeitungsgeschwindigkeit oder kurzfristige Bearbeitungsstopps einzelner Systemkomponenten auszugleichen.

Es ist weiters bekannt, Einzelkomponenten von solchen Produktionslinien mit einem zentralen Leitstand zu verbinden, um hier einen Gesamtüberblick über den jeweiligen Betriebeszustand der Produktionslinie zu erhalten. Die Einrichtung eines solchen Leitstandes ist jedoch sehr aufwendig, da die Einzelkomponenten der Produktionslinie, die oftmals von unterschiedlichen Herstellern stammen, in ein Gesamtsteuerungssystem integriert werden müssen, was eine aufwendige Engineering-Lösung erfordert.

Weiters ist es für das Bedienungspersonal einer Produktionslinie schwierig, einen Gesamtüberblick über den Systemzustand zu erhalten, da der Betriebszustand der einzelnen Komponenten entweder überhaupt nicht angezeigt wird oder auf unterschiedlichen Displays in unterschiedlicher Weise dargestellt wird. Um eine solche Produktionslinie zu betreuen, bedarf es daher ein aufwendigen Einschulung und einer großen Erfahrung für das Betriebspersonal.

Es sind weiters Industrie-PCs bekannt, die über Schnittstellen einerseits untereinander und andererseits mit verschiedenen Maschinen verbunden sind, um Überwachungs- und Steuerungsaufgaben vorzunehmen. Auch bei solchen Lösungen ist ein großer Aufwand erforderlich, um die Vernetzung der einzelnen Komponenten und die Abstimmung des Systems durchzuführen.

Aufgabe der vorliegenden Erfindung ist es, diese Nachteile zu vermeiden und eine Überwachungseinheit zu schaffen, die mit geringem Aufwand implementierbar ist und die es dem Bedienungspersonale einer Produktionslinie ermöglicht, den Betriebszustand der Produktionslinie in einfacher und übersichtlicher Weise zu erfassen, wobei Einschulungs- und Umschulungsmaßnahmen minimiert werden sollen. Eine weitere Aufgabe der Erfindung liegt darin, es dem Bedienungspersonal zu ermöglichen, beim Auftreten von Störungen schnell die Störungsursache zu erkennen, so dass effiziente Maßnahmen zur Beseitigung der Störung eingeleitet werden können.

Erfindungsgemäß werden diese Aufgaben dadurch gelöst, dass die Schnittstelle als eine unidirektionale Eingangsschnittstelle zum Empfang eines binären Digitalsignals ausgebildet ist.

Ein wesentlicher Aspekt der erfindungsgemäßen Lösung ist die Tatsache, dass die Verbindung zu den einzelnen Komponenten der Produktionslinie über eine einfache binäre Schnittstelle erfolgt. An der Einzelkomponente kann dies über ein einfache Relais oder als Ausgang einer SPS realisiert werden. Da von der Überwachungseinheit kein Signal an die Maschine zurückgegeben wird, sind hier keine besonderen Vorkehrungen zu treffen, um eine nachteilige Beeinflussung auszuschließen. Aufgrund der besonders einfachen Anbindung der Signalschnittstelle ist der Aufwand für die Einrichtung des Systems minimal.

Wesentlich an der vorliegenden Erfindung ist darüber hinaus, dass ein standardisiertes Gerät angeboten wird, das weitgehend unabhängig von der Art der Produktionslinie und dem genauen Aufbau der Einzelkomponenten einsetzbar ist. Die einzelnen Überwachungseinheiten sind über ein Bussystem untereinander, sowie gegebenenfalls mit einer zentralen Leitstelle verbunden, wobei für die Einrichtung des Überwachungssystems aufgrund der Standardisierung nur minimaler Parametrier-Aufwand erforderlich ist. Ein weiterer wesentlicher Aspekt der vorliegenden Erfindung ist es, dass die Anzeigen am Display ebenfalls standardisiert sind, so dass nur ein minimaler Einschulungs- bzw. Umschulungsbedarf für Personal besteht. Durch die standardisierte Anzeige des Betriebszustandes vor Ort ist es möglich, bei Störungen die Störungsursache schnell und effizient zu erkennen. Insbesondere kann durch die gemeinsame Erfassung der Daten mittels einer Server-Software in einer Leitstelle das Grundproblem der Störung rasch erfasst werden. Dies ist ein wesentlicher Faktor, da in einer vernetzten Produktionslinie die meisten Störungen eine Vielzahl von Folgestörungen verursachen, die ihre Ursache direkt oder indirekt in der erste Störung haben. Mit der erfindungsgemäßen Lösung ist es möglich, in einfacher Weise das Grundproblem zu erkennen und so der Störung effizient abzuhelfen. In der Serversoftware werden zusätzlich zu Störungen Produktivitätskennzahlen, Sollleistungen, Ziel und Trends abgebildet. Die Serversoftware ist so ausgeführt, dass über einen Standard WEB Browser der Zugriff auf On-Line Informationen als auch auf historische Berichte erfolgt. Weiters ist die Serversoftware so ausgeführt, dass in Abhängigkeit von den angeschlossenen Boxen Berichte generiert werden können.

Eine besonders begünstigte Ausführungsvariante der Erfindung sieht vor, dass das Display als Touchscreen-Display ausgebildet ist. Auf diese Weise ist es möglich, eine große Informationsmenge am Gerät selbst anzubieten. Weiters ist es möglich, Mit der Server-Software zu kommunizieren, indem man beispielsweise mitteilt, dass an der betreffenden Einzelkomponente Wartungsarbeiten durchgeführt werden, so dass die eingehenden Signale anders interpretiert werden.

Die Stromversorgung der Überwachungseinheiten erfolgt wahlweise über Netzspannung oder über ein Niederspannungs-Gleichstromsystem von beispielsweise 24V.

In der Folge wird eine erfindungsgemäße Überwachungseinheit anhand der Figuren näher erläutert. Es zeigen:
- Fig. 1: den grundsätzlichen Aufbau einer erfindungsgemäßen Vorrichtung;
- Fig. 2: ein Anwendungsbeispiel als Blockdiagramm; und
- Fig. 3: ein weiteres Diagramm in größerem Detail.

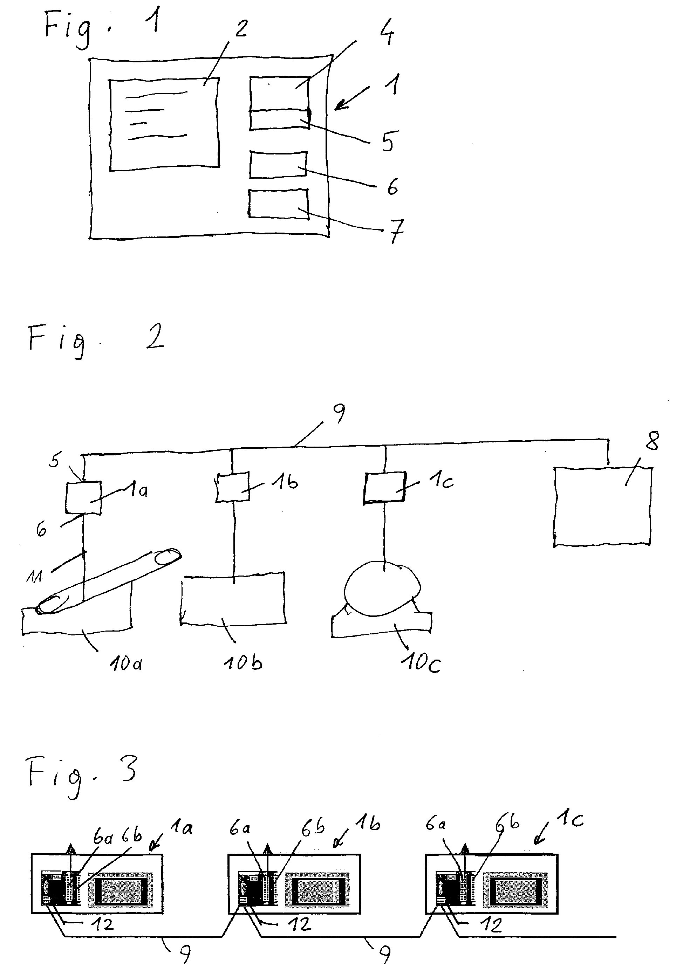

Die Vorrichtung von Fig. 1 ist allgemeint mit 1 bezeichnet. Sie verfügt über ein Display 2, um die Bedienung zu ermöglichen. Eine Schnittstelleneinheit 4 weist eine mit 5 bezeichnete Profibus-Schnittstelle auf. Eine weitere Schnittstelle 6 ist für den Anschluss an eine Komponente einer Produktionslinie über eine Signalleitung 11 vorgesehen. Eine Stromversorgungseinheit ist mit 7 gekennzeichnet.

In Fig. 2 ist der Einsatz der Vorrichtung von Fig. 1 dargestellt. Insgesamt sind drei erfindungsgemäße Vorrichtungen 1a, 1b, 1c über einen Bus 9 untereinander und mit einem Zentralrechner 8 verbunden, der die Funktion einer Leitstelle einnehmen kann. Schematisch mit 10a, 10b, 10c sind Einzelkomponenten einer Produktionslinie bezeichnet.

Fig. 3 zeigt die Zusammenstellung von erfindungsgemäßen Vorrichtungen in größerem Detail. Die einzelnen Vorrichtungen 1a, 1b, 1c besitzen jeweils zwei Anschlüsse 6a, 6b für hier nicht dargestellte Einzelkomponenten einer Produktionslinie. Die einzelnen Klemmen dieser Anschlüsse sind mit Signaleingängen für verschiedene Alarme, Zähler, Betriebssignale und dergleichen, sowie mit Masse belegt. Je nach Betriebszustand, bzw. Art der Störung wird somit von der jeweiligen Einzelkomponente ein 24-Volt-DC-Signal an der jeweiligen Klemme angelegt, um die benötigte Information zu übermitteln. Der Bus 9 dient, wie oben ausgeführt, zur Kommunikation der einzelnen Vorrichtungen 1a, 1b, 1c und eine Versorgungsleitung 12 dient zur Stromversorgung beispielsweise mit 24-Volt-DC.

Die erfindungsgemäße Vorrichtung ermöglicht es in einfacher Weise eine standardisierte Überwachung und Datenerfassung bei Produktionslinien vorzunehmen, die aus unterschiedlichen Einzelkomponenten zusammengesetzt sind.

## Patentansprüche

1. Vorrichtung zur Überwachung von Produktionsabläufen auf Produktionslinien mit mindestens einer Einzelkomponente (10a, 10b, 10c), bestehend aus mindestens einer Überwachungseinheit (1; 1a, 1b, 1c), die mit einem Bussystem in Verbindung steht, wobei die Überwachungseinheit (1; 1a, 1b, 1c) aus einem standardisierten Gehäuse besteht, in dem eine Schnittstelle (6; 6a, 6b) zur Verbindung der Überwachungseinheit (1; 1a, 1b, 1c) mit einer Einzelkomponente (10a, 10b, 10c) der Produktionslinie vorgesehen ist, und dass die Überwachungseinheit ein Display (2) aufweist, das dazu ausgebildet ist, den Betriebszustand der Einzelkomponente (10a, 10b, 10c) anzuzeigen, **dadurch gekennzeichnet, dass** die Schnittstelle (6; 6a, 6b) als eine unidirektionale Eingangsschnittstelle zum Empfang eines binären Digitalsignals ausgebildet ist.

2. Vorrichtung nach Anspruch 1, **dadurch gekennzeichnet, dass** das Display (2) als Touchscreen-Display ausgebildet ist.

3. Vorrichtung nach einem der Ansprüche 1 oder 2, **dadurch gekennzeichnet, dass** das binäre Digitalsignal als 24 V DC_Signal ausgebildet ist.
